# EUROPEAN PATENT SPECIFICATION

(11) **EP 3 722 914 B1**
(45) Date of publication and mention of the grant of the patent: **28.09.2022**
(21) Application number: 18885295.8
(22) Date of filing: 18.04.2018
(51) Int. Cl.: G05D 3/10, F24S 30/45, F24S 30/48, F24S 30/00

(54) **CONDENSING DEVICE**
KONDENSATIONSVORRICHTUNG
DISPOSITIF DE CONDENSATION

(30) Priority: 04.12.2017 CN 201711257063
(43) Date of publication of application: 14.10.2020
(73) Proprietor: Asia Pacific Mega Trade Limited, Kowloon, Hong Kong 999077 (CN)
(72) Inventor: LEUNG, Wai Man, Kowloon Hong Kong 999077 (CN)
(74) Representative: Michalski Hüttermann & Partner Patentanwälte mbB
(86) International application number: PCT/CN2018/083444
(87) International publication number: WO 2019/109569

(56) References cited:
- CN-A- 102 043 228
- CN-A- 102 540 402
- CN-A- 105 302 167
- CN-A- 105 352 200
- CN-U- 204 695 117
- CN-U- 206 471 029
- CN-U- 206 629 020
- CN-U- 207 440 629
- US-A- 4 218 114
- US-A1- 2004 031 483
- US-A1- 2004 031 483
- US-A1- 2009 314 280
- US-A1- 2009 314 280
- US-A1- 2010 101 560

## Description

### BACKGROUND OF THE INVENTION

### 1. Field of the Invention

The present invention relates to a condensing device.

### 2. Description of the Related Art

Currently, a plurality of reflective mirrors are mounted on a planar structure of a condensing device. Through the planar structure of the light condensing device rotates for tracking the east and west angles of the sun, each reflective mirror has a fixed trajectory when tracking the pitch angle of the sun. However, in the tracking process, each reflective mirror has different two-dimensional rotations and speeds, leading to having difficulty in control. In addition, U.S. Patent No. US 6820611B2 has disclosed a solar radiation concentrator and method of concentration solar radiation , which are single-piece processed products. This means that batch manufacturing is more difficult.

Documents US 2004/031483 A1, US 2009/314280 A1, US 2010/101560 A1 and US 4 218 114 A also disclose similar reflective mirrors that are mounted on a planar structure of a condensing device.

### SUMMARY OF THE INVENTION

The subject of the present invention is to overcome the deficiency of current techniques in order to provide a condensing device, which may be batch-manufactured, with a fine condensing effect and a reflection angle of a reflective mirror that may be adjusted and controlled according to the declination angle.

Based on the above subjects, the present invention provides a condensing device, including:
a mounting platform structure, an energy-collecting structure, and more than one mounting frame structure, wherein the mounting platform structure tracks east and west angles of a sun and rotates synchronously, the energy-collecting structure is located above the mounting platform structure, and the mounting frame structures are mounted on the mounting platform structure;
more than one rotating device and more than one reflective mirror, wherein each of the rotating devices is disposed on the corresponding mounting frame structure, each of the reflective mirrors is disposed on the corresponding rotating device, and the reflective mirror may rotate universally on the mounting frame structures through the rotating device;
more than one driving device, more than one guide rail, and more than one telescopic device, wherein each of the driving devices is disposed on one end of the corresponding telescopic device, the other end of each of the telescopic devices is disposed on the corresponding reflective mirror or the rotating device, each of the guide rails is disposed on the mounting platform structure or the mounting frame structure, each of the driving devices is disposed on the corresponding guide rail and may move along the guide rail to drive the reflective mirror to rotate, a curving radian of each of the guide rails is different from each other, such that each of the reflective mirror rotates in different rotational directions, and light reflected by the reflective mirror may be reflected onto the energy-collecting structure.

In the technical solution, the rotating device is a mounting frame; the mounting frame is disposed on the mounting frame structures and may rotate, the reflective mirror is disposed on the mounting frame and may rotate, an axis line which the reflective mirror rotated by and an axis line which the mounting frame rotated by are perpendicular to each other, the other end of the telescopic device is disposed on a central position of the reflective mirror, and the driving device moves along the guide rail to drive the reflective mirror to rotate universally.

In the technical solution, the rotating device includes a universal ball and a mounting rod; one end of the mounting rod is disposed on the universal ball, the other end of the mounting rod is disposed on the central position of the reflective mirror, a ball hole is provided on the mounting frame structures, the universal ball is disposed in the ball hole with a gap therebetween, the other end of the telescopic device is disposed on the universal ball, and the driving device moves along the guide rail to drive the reflective mirror to rotate universally.

In the technical solution, an extremity of each of the guide rails is an extremity of a declination angle of the sun.

Compared to current techniques, the condensing device of the present invention, which may be batch-manufactured, has the advantages of a fine condensing effect and a reflection angle of a reflective mirror that may be adjusted and controlled according to a declination angle of the sun.

### BRIEF DESCRIPTION OF THE DRAWINGS

FIG. 1 is a perspective view of a rotating device as a mounting frame in the present invention;
FIG. 2 is a perspective view of a single mounting frame structure, rotating device, reflective mirror, driving device, guide rail, and telescopic device which cooperate with one another in FIG. 1;
FIG. 3 is an exploded view of FIG. 1;
FIG. 4 is a top view only with a mounting platform structure and a guide rail of the present invention;
FIG. 5 is a perspective view of a rotating device as a universal ball and a mounting rod of the present invention;
FIG. 6 is a perspective view of a single mounting frame structures, rotating device, reflective mirror, driving device, guide rail, and telescopic device which cooperate with one another in FIG. 5;
FIG. 7 is an exploded view of FIG. 6;
FIG. 8 is a top view of FIG. 6;
FIG. 9 is an enlarged sectional view taken along A-A in FIG. 8;
FIG. 10 is a perspective view of a device for determining a curving radian of a guide rail;
FIG. 11 is a left view of FIG. 10;
FIG. 12 is a top view of scale paper;
FIG. 13 is a schematic diagram for determining a curving radian of a guide rail on a vertical plane.

### DESCRIPTION OF THE PREFERRED EMBODIMENTS

The embodiments of the present invention will be further described hereinafter with reference to the accompanying drawings. It should be noted that the descriptions of these embodiments are used to help understand the present invention without limiting the present invention. In addition, the technical features involved in various embodiments of the present invention described hereinafter may be combined with one another as long as they do not have any conflict.

In the description of the present invention, the orientation or positional relationship indicated by the terms "front", "rear", "left", "right", etc., depends on the orientation or positional relationship illustrated in the drawings, which is only for the convenience of describing the present invention instead of requiring that the present invention must be constructed and operated in a specific orientation. Hence, it should not be understood as a limitation to the present invention.

In the description of the present invention, the terms "first" and "second" are used to describe purposes only, and should not be construed to indicate or imply relative importance.

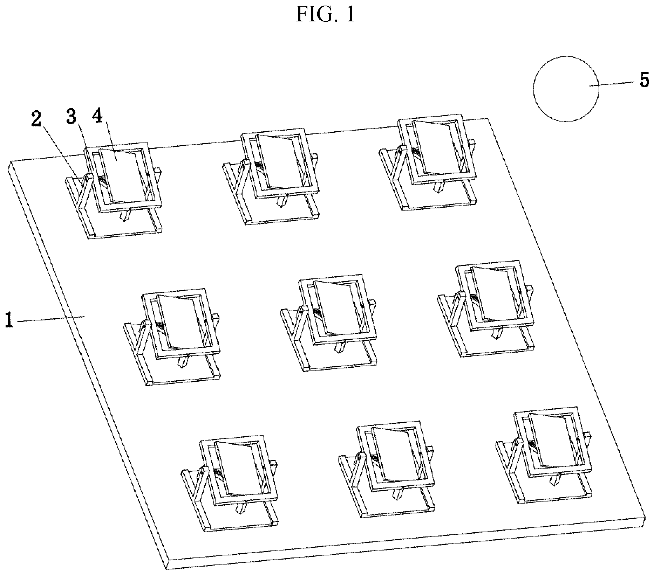

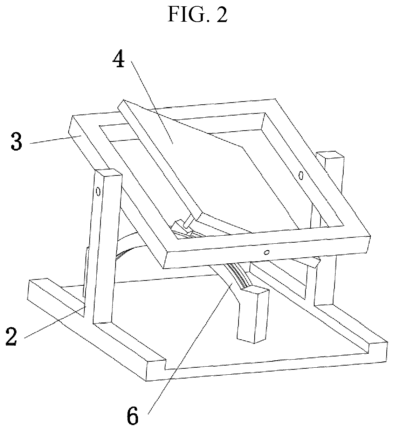

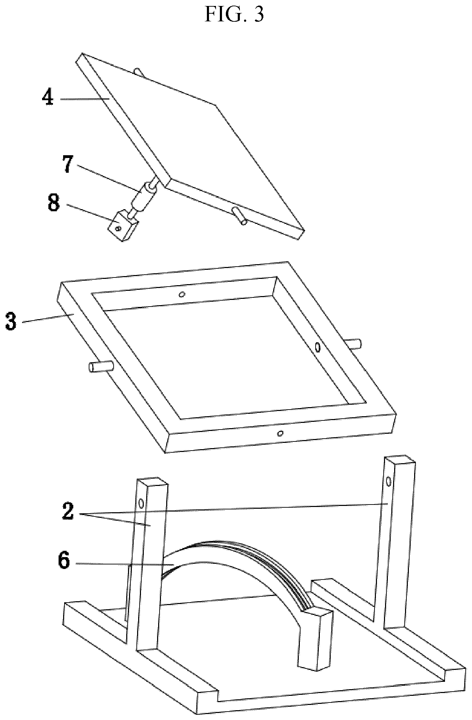

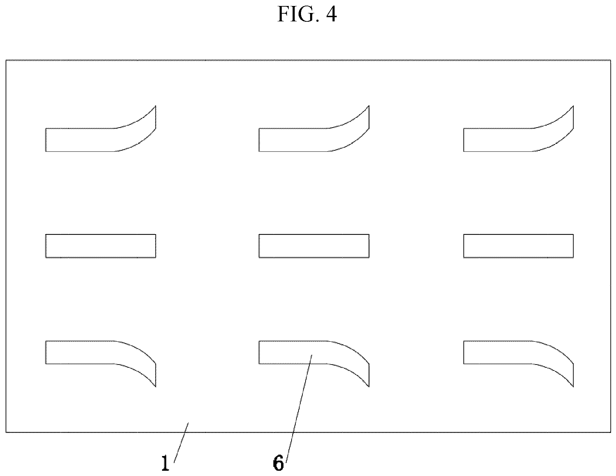

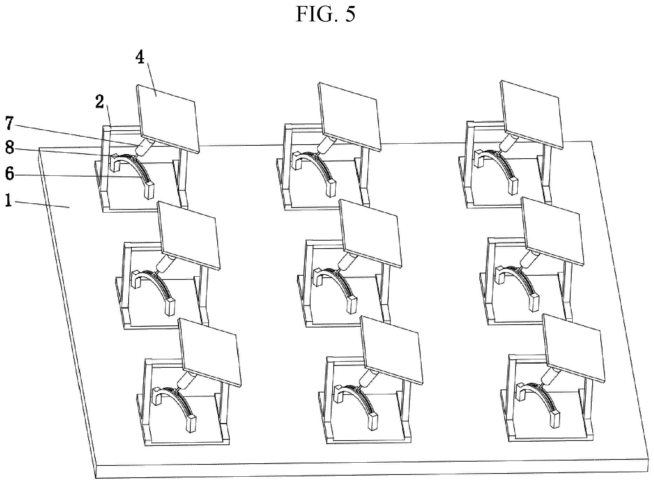

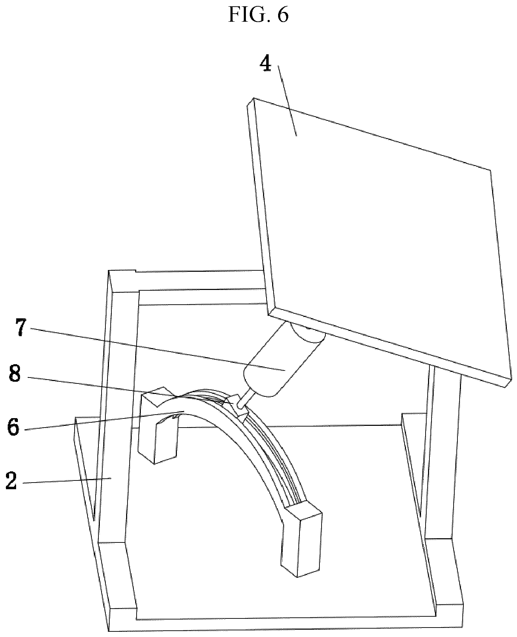

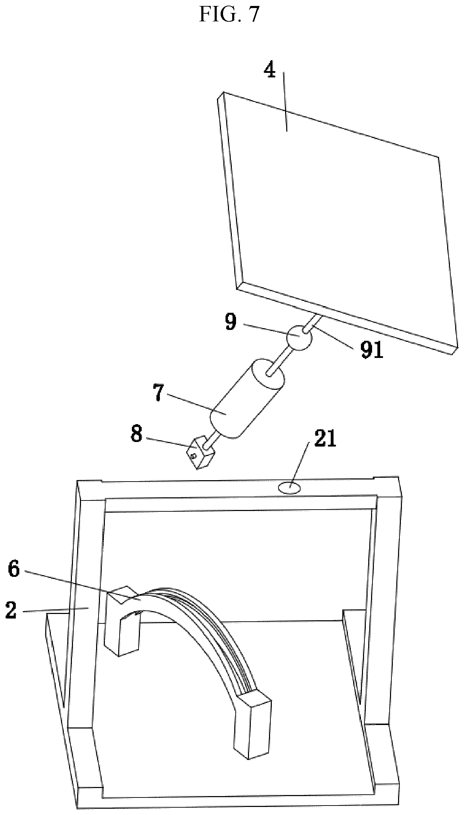

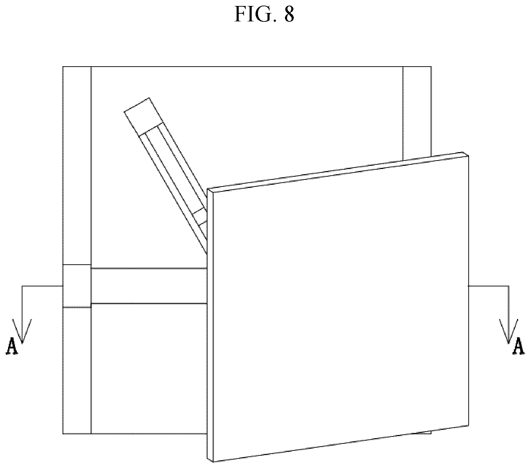

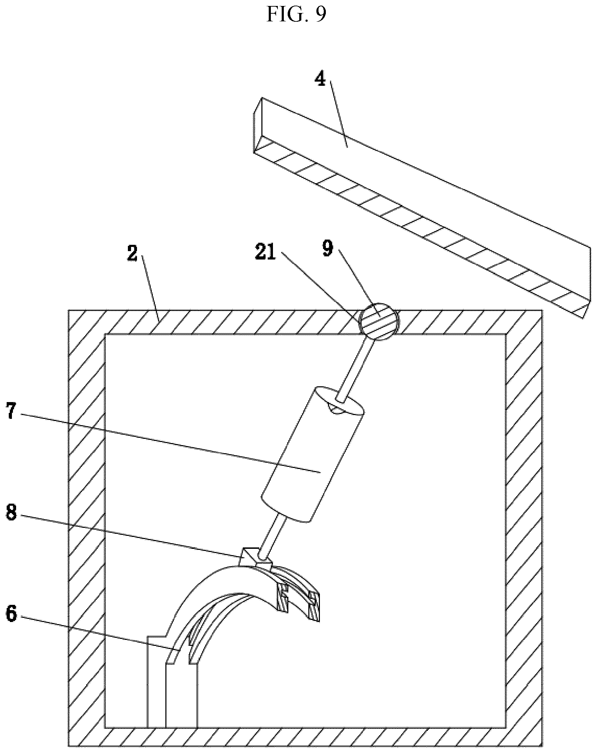

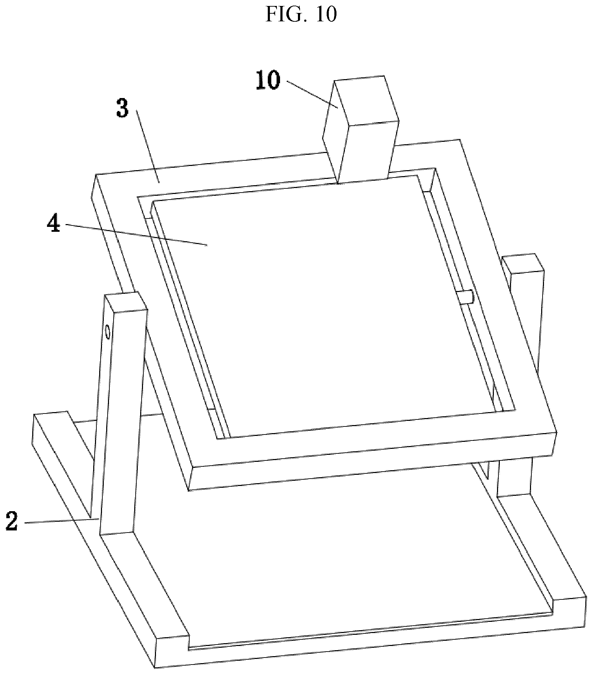

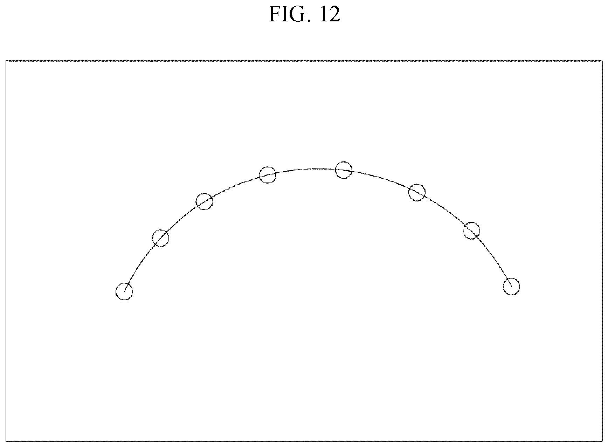

As shown in FIG. 1 to FIG. 12, the condensing device includes:
a mounting platform structure 1, an energy-collecting structure 5, and more than one mounting frame structure 2, wherein the mounting platform structure 1 may track east and west angles of a sun and rotate synchronously, the energy-collecting structure 5 is located above the mounting platform structure 1, and the mounting frame structure 2 is mounted on the mounting platform structure 1; wherein the mounting platform structure 1 includes a planar table, a mounting post, and a motor; the planar table is sleeved on the mounting post and may rotate horizontally, and the motor drives the planar table to rotate horizontally, which may realize the mounting platform structure 1 tracks east and west angles of the sun and rotating synchronously.

More than one rotating device and more than one reflective mirror 4, wherein each of the rotating devices is disposed on the corresponding mounting frame structure 2, each of the reflective mirrors is disposed on the corresponding rotating device, and the reflective mirror may rotate universally on the mounting frame structure 2 through the rotating device 3;
more than one driving device 8, more than one guide rail 6, and more than one telescopic device 7, wherein each of the driving devices 8 is disposed on one end of the corresponding telescopic device 7, the other end of each of the telescopic devices 7 is disposed on the corresponding reflective mirror 4 or the rotating device, each of the guide rails 6 is disposed on the mounting platform structure 1 or the mounting frame structure 2, each of the driving devices 8 is disposed on the corresponding guide rail 6 and may move along the guide rail 6 to drive the reflective mirror 4 to rotate, a curving radian of each of the guide rails 6 is different from each other, such that each of the reflective mirrors 4 rotates in different rotational directions, and light reflected by the reflective mirror 4 may be reflected onto the energy-collecting structure 5. When in an operation, since each of the reflective mirrors 4 has a different distance from the energy-collecting structure 5, the curving radian of each of the guide rails 6 is different from each other, which makes the rotational angle of each of the reflective mirrors 4 inconsistent; each of the reflective mirrors 4 rotates with a corresponding angle to reflect light onto the energy-collecting structure 5.

In the embodiment, the rotating device is a mounting frame 3; the mounting frame 3 is disposed on the mounting frame structure 2 and may rotate, the reflective mirror 4 is disposed on the mounting frame 3 and may rotate, an axis line which the reflective mirror 4 rotated by and an axis line which the mounting frame 3 rotated by are perpendicular to each other, the other end of the telescopic device 7 is disposed on a central position of the reflective mirror 4, and the driving device 8 moves along the guide rail 6 to drive the reflective mirror 4 to rotate universally.

In the embodiment, the rotating device includes a universal ball 9 and a mounting rod 91; one end of the mounting rod 91 is disposed on the universal ball 9, the other end of the mounting rod 91 is disposed on the central position of the reflective mirror 4, a ball hole 21 is provided on the mounting frame structure 2, the universal ball is disposed in the ball hole 21 with a gap in between, the other end of the telescopic device 7 is disposed on the universal ball 9, and the driving device 8 moves along the guide rail 6 to drive the reflective mirror 4 to rotate universally.

In the exemplary embodiment not covered by the invention, an extremity of each of the guide rails is an extremity of a pitch angle of the sun.

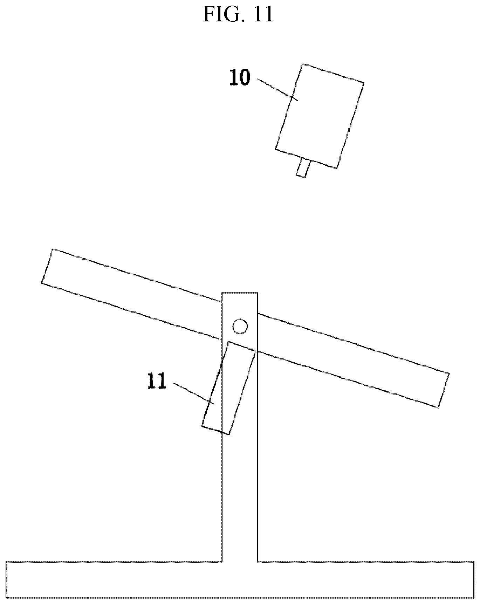

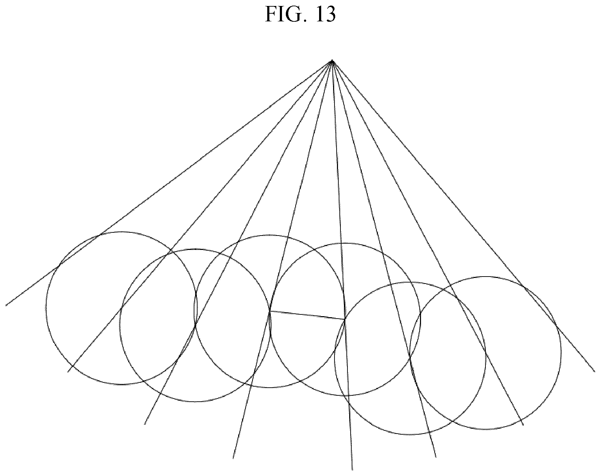

As shown in FIG. 11 to FIG. 13, the determining method for the radian of the guide rail 6 is described as follows:
Step 1: Adjusting the laser goniometer 10 to make the laser emitted by the laser goniometer 10 project onto the center of the front of the reflective mirror 4;
Step 2: Disposing the laser normal-line trajectory gauge 11 on the center of the rear of the reflective mirror 4, wherein the laser emitted by the laser goniometer 10, the axis line of the rotational shaft, and the laser normal-line trajectory gauge are concentric with a common axis;
Step 3: Rotating the laser goniometer 10 within the range between 0 and 90° and keeping the laser emitted by the laser goniometer 10 in the center of the front of the reflective mirror 4, wherein while rotating the laser goniometer 10, the reflective mirror 4 also rotates, which makes the light reflected by the reflective mirror 4 reflect onto the energy-collecting structure 5, wherein the laser points emitted by the laser normal-line trajectory gauge 11 are the records of points by normal-line trajectory every degree on the scale paper;
Step 4: A method for determining the curving radian of the guide rail 6 on a horizontal plane: The records of points on the scale paper are the curving radian of the guide rail 6 on a horizontal plane;
Step 5: A method for determining the curving radian of the guide rail 6 on a vertical plane: The rays emitted by the laser normal-line trajectory gauge 11 are recorded. The recorded laser normal line forms a plurality of included angles on a vertical plane. The largest included angle is used to draw an isosceles triangle. A circle is drawn according to the base angle of the isosceles triangle as a center of the circle. The length of the radius of the circle is equal to that of base of the isosceles triangle. The drawn circle intersects with the adjacent rays, and a circle is drawn based on a lower point of intersection. The radius of the circles are the same. The circles intersect with the adjacent rays, and a circle is drawn based on a lower point of intersection. The aforementioned step is repeated to draw a plurality of circles. The arc line formed by connecting the centers of the circles is the curving radian of the guide rail 6 on a vertical plane. The curving radian on the horizontal plane and the curving radian of the guide rail 6 on the vertical plane are combined to obtain a radian corresponding to the guide rail 6.

In another way, the computer software, CAD, is used to key in coordinates of every point on the scale paper according to Step 3 and after that, and every point and the center of the rear of the reflective mirror 4 is connected to form a stereo fan-ray diagram. The largest included angle is used to draw an isosceles triangle. A circle is drawn according to the base angle of the isosceles triangle as a center of the circle. The length of the radius of the circle is equal to that of base of the isosceles triangle. The drawn circle intersects with the adjacent rays, and a circle is drawn based on a lower point of intersection. The radius of the circles are the same. The circles intersect with the adjacent rays, and a circle is drawn based on a lower point of intersection. The aforementioned step is repeated to draw a plurality of circles. The arc line formed by connecting the centers of the circles is the stereo curving radian of the guide rail 6.

The embodiments of the present invention are described in detail as mentioned with reference to the accompanying drawings; however, the present invention is not limited to the described embodiments. For a person of ordinary skill in the art, without departing from the principles and purposes of the present invention, several variations, modifications, replacements, and deformations of these embodiments still fall within the scope protected by the present invention.

## Claims

1. A condensing device, comprising:
a mounting platform structure (1), an energy-collecting structure (5), and more than one mounting frame structure (2); the mounting platform structure (1) tracks east and west angles of a sun and rotating synchronously, the energy-collecting structure (5) located above the mounting platform structure (1), and the mounting frame structure (2) is mounted on the mounting platform structure (1);
more than one rotating device and more than one reflective mirror (4); each of the rotating devices are disposed on the corresponding mounting frame structure (2), each of the reflective mirrors (4) are disposed on the corresponding rotating device, and the reflective mirrors (4) are rotating universally on the mounting frame structure (2) through the rotating device;
more than one driving device (8), more than one guide rail (6), and more than one telescopic device (7); each of the driving devices (8) are disposed on one end of the corresponding telescopic device (7), the other end of each of the telescopic devices (7) are disposed on the corresponding reflective mirrors (4) or the rotating device, each of the guide rails (6) are disposed on the mounting platform structure (1) or the mounting frame structure (2), each of the driving devices (8) are disposed on the corresponding guide rails (6) and move along the guide rails (6) to drive the reflective mirrors (4) to rotate, a curving radian of each of the guide rails (6) is different from each other, such that each of the reflective mirrors (4) rotate in different rotation directions, and light reflected by the reflective mirror (4) is reflected onto the energy-collecting structure (5).

2. The condensing device according to claim 1, wherein the rotating device is a mounting frame (3); the mounting frame (3) is disposed on the mounting frame structure (2) and is rotatable, the reflective mirror (4) is disposed on the mounting frame (3) and is rotatable, an axis linewhich the reflective mirror (4) rotated by and an axis line which the mounting frame (3) rotated by are perpendicular to each other, the other end of the telescopic device (7) is disposed on a central position of the reflective mirror (4), and the driving device (8) moves along the guide rail (6) to drive the reflective mirror (4) to rotate universally.

3. The condensing device according to claim 1, wherein the rotating device comprises a universal ball (9) and a mounting rod (91); one end of the mounting rod (91) is disposed on the universal ball (9), the other end of the mounting rod (91) is disposed on the central position of the reflective mirror (4), a ball hole (21) is provided on the mounting frame structure (2), the universal ball (9) is disposed in the ball hole (21) with a gap therebetween, the other end of the telescopic device (7) is disposed on the universal ball (9), and the driving device (8) moves along the guide rail (6) to drive the reflective mirror (4) to rotate universally.

4. The condensing device according to any of claims 1 to 3, wherein an extremity of each of the guide rails (6) is an extremity of a declination angle of the sun.

## Patentansprüche

1. Kondensorvorrichtung, mit:
einer Montageplattformstruktur (1), einer Energiesammelstruktur (5) und mehr als einer Montagerahmenstruktur (2), wobei die Montageplattformstruktur (1) Ost- und Westwinkeln einer Sonne folgt und sich synchron dreht, wobei die Energiesammelstruktur (5) oberhalb der Montageplattformstruktur (1) angeordnet ist und die Montagerahmenstruktur (2) auf der Montageplattformstruktur (1) montiert ist;
mehr als einer Drehvorrichtung und mehr als einem reflektierenden Spiegel (4), wobei jede der Drehvorrichtungen auf der entsprechenden Montagerahmenstruktur (2) angeordnet ist, jeder der reflektierenden Spiegel (4) auf der entsprechenden Drehvorrichtung angeordnet ist, und die reflektierenden Spiegel (4) sich durch die Drehvorrichtung auf der Montagerahmenstruktur (2) universell drehen;
mehr als einer Antriebsvorrichtung (8), mehr als einer Führungsschiene (6) und mehr als einer Teleskopvorrichtung (7), wobei die Antriebsvorrichtungen (8) jeweils an einem Ende der entsprechenden Teleskopvorrichtung (7) angeordnet sind, das andere Ende jeder der Teleskopvorrichtungen (7) auf den entsprechenden reflektierenden Spiegeln (4) oder auf der Drehvorrichtung angeordnet ist, jede der Führungsschienen (6) auf der Montageplattformstruktur (1) oder auf der Montagerahmenstruktur (2) angeordnet ist, die Antriebsvorrichtungen (8) auf jeweiligen Führungsschienen (6) angeordnet sind und sich entlang den Führungsschienen (6) bewegen, um die reflektierenden Spiegel (4) drehbar anzutreiben, wobei die Krümmungsradien der Führungsschienen (6) voneinander verschieden sind, so dass jeder der reflektierenden Spiegel (4) sich in unterschiedliche Drehrichtungen dreht, und wobei das durch die reflektierenden Spiegel (4) reflektierte Licht auf die Energiesammelstruktur (5) reflektiert wird.

2. Kondensorvorrichtung nach Anspruch 1, wobei die Drehvorrichtung ein Montagerahmen (3) ist, der Montagerahmen (3) auf der Montagerahmenstruktur (2) angeordnet und drehbar ist, der reflektierende Spiegel (4) auf dem Montagerahmen (3) angeordnet und drehbar ist, eine Achsenlinie, um die sich der reflektierende Spiegel (4) dreht, und eine Achsenlinie, um die sich der Montagerahmen (3) dreht, senkrecht zueinander stehen, das andere Ende der Teleskopvorrichtung (7) an einer Mittenposition des reflektierenden Spiegels (4) angeordnet ist, und die Antriebsvorrichtung (8) sich entlang der Führungsschiene (6) bewegt, um den reflektierenden Spiegel (4) in einer universellen Drehbewegung anzutreiben.

3. Kondensorvorrichtung nach Anspruch 1, wobei die Drehvorrichtung eine Universalkugel (9) und eine Montagestange (91) aufweist, ein Ende der Montagestange (91) auf der Universalkugel (9) angeordnet ist, das andere Ende der Montagestange (91) an der Mittenposition des reflektierenden Spiegels (4) angeordnet ist, ein Kugelloch (21) auf der Montagerahmenstruktur (2) ausgebildet ist, die Universalkugel (9) im Kugelloch (21) mit einem Spalt dazwischen angeordnet ist, das andere Ende der Teleskopvorrichtung (7) auf der Universalkugel (9) angeordnet ist und die Antriebsvorrichtung (8) sich entlang der Führungsschiene (6) bewegt, um den reflektierenden Spiegel (4) in einer universellen Drehbewegung anzutreiben.

4. Kondensorvorrichtung nach einem der Ansprüche 1 bis 3, wobei eine Extremität jeder der Führungsschienen (6) eine Extremität eines Deklinationswinkels der Sonne ist.

## Revendications

1. Dispositif de condensation comprenant :
une structure de type plateforme de montage (1), une structure de collecte d'énergie (5), et plus d'une structure de type châssis de montage (2) ; la structure de type plateforme de montage (1) effectue le suivi d'angles est et ouest du soleil et est en rotation de manière synchrone, la structure de collecte d'énergie (5) étant située au-dessus de la structure de type plateforme de montage (1) et la structure de type châssis de montage (2) est montée sur la structure de type plateforme de montage (1) ;
plus d'un dispositif de rotation et plus d'un miroir de réflexion (4) ; chacun parmi les dispositifs de rotation est disposé sur la structure de type châssis de montage (2) correspondante, chacun des miroirs de réflexion (4) est disposé sur le dispositif de rotation correspondant, et les miroirs de réflexion (4) sont universellement rotatifs sur la structure de type châssis de montage (2) par le dispositif de rotation ;
plus d'un dispositif d'entraînement (8), plus d'un rail de guidage (6) et plus d'un dispositif télescopique (7) ; chacun des dispositifs d'entraînement (8) est disposé sur une extrémité du dispositif télescopique (7) correspondant, l'autre extrémité de chacun des dispositifs télescopiques (7) est disposée sur le miroir de réflexion (4) correspondant ou le dispositif de rotation, chacun des rails de guidage (6) est disposé sur la structure de type plateforme de montage (1) ou la structure de type châssis de montage (2), chacun des dispositifs d'entraînement (8) est disposé sur le rail de guidage (6) correspondant et se déplace le long des rails de guidage (6) pour entraîner les miroirs de réflexion (4) pour qu'ils tournent, un rayon de courbure de chacun des rails de guidage (6) est différent par rapport aux autres, de sorte que chacun des miroirs de réflexion (4) tourne dans différentes directions de rotation, et de la lumière réfléchie par le miroir de réflexion (4) est réfléchie sur la structure de collecte d'énergie (5).

2. Dispositif de condensation selon la revendication 1, dans lequel le dispositif de rotation est un châssis de montage (3) ; le châssis de montage (3) est disposé sur la structure de type châssis de montage (2) et est rotatif, le miroir de réflexion (4) est disposé sur le châssis de montage (3) et est rotatif, une ligne d'axe autour de laquelle le miroir de réflexion (4) est rotatif et une ligne d'axe autour de laquelle le châssis de montage (3) est rotatif sont perpendiculaires l'une à l'autre, l'autre extrémité du dispositif télescopique (7) est disposée sur une position centrale du miroir de réflexion (4), et le dispositif d'entraînement (8) se déplace le long du rail de guidage (6) pour entraîner le miroir de réflexion (4) pour qu'il tourne universellement.

3. Dispositif de condensation selon la revendication 1, dans lequel le dispositif rotatif comprend une bille universelle (9) et une tige de montage (91) ; une extrémité de la tige de montage (91) est disposée sur la bille universelle (9), l'autre extrémité de la tige de montage (91) est déposée sur une position centrale du miroir de réflexion (4), un trou de bille (21) est mis en place sur la structure de type châssis de montage (2), la bille universelle (9) est disposée dans le trou de bille (21) avec un intervalle entre eux, l'autre extrémité du dispositif télescopique (7) est disposée sur la bille universelle (9) et le dispositif d'entraînement (8) se déplace le long du rail de guidage (6) pour entraîner le miroir de réflexion (4) pour qu'il tourne universellement.

4. Dispositif de condensation selon l'une quelconque des revendications 1 à 3, dans lequel une extrémité de chacun des rails de guidage (6) est une extrémité d'un angle de déclinaison du soleil.
